# EUROPEAN PATENT APPLICATION

(11) **EP 4 167 159 A1**
(43) Date of publication of application: **19.04.2023**
(21) Application number: 22191537.4
(22) Date of filing: 22.08.2022
(51) Int. Cl.: G06Q 10/083

(54) **INFORMATION PROCESSING SYSTEM, METHOD FOR PRESENTING DELIVERY SERVICE DETAIL, AND PROGRAM**

(30) Priority: 13.10.2021 JP 2021168169
(71) Applicant: Rakuten Group, Inc., Setagaya-ku Tokyo 158-0094 (JP)
(72) Inventor: YAMAMOTO, Chisa, Tokyo, 158-0094 (JP); HIRANO, Yuya, Tokyo, 158-0094 (JP); NISHIHARA, Hiromasa, Tokyo, 158-0094 (JP); ABHYANKAR, Vishwas, Tokyo, 158-0094 (JP)
(74) Representative: EIP

(57) **Abstract**

The control unit 16 of the UAV 1 detects the UAV 50 as a search target on the basis of the sensing data obtained by sensing of the sensor unit 14, and moves the UAV 1 to a position above the detected UAV 50. Then, the control unit 16 identifies a current position of the UAV 1 when the UAV 1 has moved to the position above the UAV 50, and transmits search position information indicating the identified current position as the current position of the UAV 50.

## Description

### BACKGROUND

### Technical Field

One or more embodiments of the present invention relates to a technical field such as a method for identifying a packing material for packing an item.

### Related Art

An item ordered by a user through an EC (Electronic Commerce) site or the like is packed using a packing material such as a packing box and delivered to a delivery destination. Patent Literature 1 discloses a technique for identifying a packing box capable of storing items of a size and the number included in an inquiry from a transport contract server to a packing box DB using a predetermined algorithm, an AI technique, or the like.

### Citation List

### Patent Literature

Patent Literature 1: WO 2020/217344 A

### Summary of Invention

### Technical Problem

By the way, there are various types and sizes of packing materials for packing an item, and delivery service details such as a delivery fee and a delivery method available to a user may be different depending on such packing materials. However, in the related art, it is difficult to present an appropriate delivery service detail to the user in accordance with the packing material.

Therefore, one or more embodiments of the present invention are directed to providing an information processing system, a method for presenting a delivery service detail, and a program, which are capable of presenting an appropriate delivery service detail to a user according to a packing material.

### Solution to Problem

In response to the above issue, the invention according to claim 1 is an information processing system including: an acquisition unit configured to acquire item information regarding an item selected by a user; a first identifying unit configured to identify a packing material used for delivery of the item on a basis of the item information; a second identifying unit configured to identify a delivery service detail according to the packing material, the delivery service detail being available to the user; and a presentation unit configured to present the delivery service detail to the user. This makes it possible to present an appropriate delivery service detail to the user according to the identified packing material.

The invention according to claim 2 is the information processing system according to claim 1, wherein the presentation unit presents the delivery service detail to the user before an order of the item selected by the user is confirmed. This makes it possible to present an appropriate delivery service detail to the user according to the identified packing material before an order of the item selected by the user is confirmed.

The invention according to claim 3 is the information processing system according to claim 1 or 2, wherein the presentation unit updates the delivery service detail presented to the user every time the item is selected by the user. This makes it possible to present the updated delivery service detail to the user each time the user selects an item.

The invention according to claim 4 is the information processing system according to any one of claims 1 to 3, wherein the second identifying unit identifies a plurality of delivery service details according to the packing material, and the presentation unit presents each of the delivery service details to the user so that the user can select any one of the plurality of delivery service details. This allows the user to select the desired delivery service detail from among the plurality of identified delivery service details.

The invention according to claim 5 is the information processing system according to any one of claims 1 to 4, wherein the first identifying unit identifies the packing material by using a learned model that learned from learning data in which item information regarding an item is input data and a packing material size used for delivery of the item is output data. This makes it possible to identify a more appropriate packing material.

The invention according to claim 6 is the information processing system according to claim 5, wherein the item information used as input data in the learning data varies depending on an item category. This makes it possible to identify an appropriate packing material according to the item category.

The invention according to claim 7 is the information processing system according to claim 5, wherein the item information used as input data in the learning data includes an item name and an item size. This makes it possible to identify an appropriate packing material according to the item name and the item size.

The invention according to claim 8 is the information processing system according to any one of claims 5 to 7, wherein the first identifying unit inputs the item information regarding the item selected by the user to the learned model, and identifies the packing material corresponding to a minimum packing material size among a plurality of the packing material sizes output from the learned model. This makes it possible to identify an appropriate packing material that is highly convenient for the user.

The invention according to claim 9 is the information processing system according to any one of claims 1 to 8, wherein the first identifying unit extracts packing materials available in a warehouse that stores the item selected by the user, and identifies the packing material used for delivery of the item from the extracted packing materials on a basis of the item information. This makes it possible to identify an appropriate packing material from among available packing materials, which vary by warehouse.

The invention according to claim 10 is the information processing system according to any one of claims 1 to 9, wherein the first identifying unit determines whether or not the item selected by the user has a shipping record, and identifies the packing material on a basis of the shipping record in a case where it is determined that the item has the shipping record. This makes it possible to identify an appropriate packing material based on the shipping record.

The invention according to claim 11 is the information processing system according to any one of claims 1 to 10, wherein the delivery service detail includes a delivery fee of the item, the second identifying unit identifies the delivery fee according to the packing material, and the presentation unit presents the delivery fee of the item to the user. This makes it possible to present an appropriate delivery fee to the user according to the identified packing material.

The invention according to claim 12 is the information processing system according to claim 11, wherein when a plurality of delivery service details according to the packing material are identified, the second identifying unit identifies the delivery service detail with a lowest delivery fee of the item among the plurality of delivery service details, and the presentation unit presents the delivery service detail with the lowest delivery fee of the item to the user. This makes it possible to present to the user a delivery service detail that imposes the smallest financial burden on the user.

The invention according to claim 13 is the information processing system according to any one of claims 1 to 12, wherein the delivery service detail includes a delivery method of the item, the second identifying unit identifies the delivery method according to the packing material, and the presentation unit presents the delivery method of the item to the user. This makes it possible to present an appropriate delivery method to the user according to the identified packing material.

The invention according to claim 14 is the information processing system according to claim 13, wherein the delivery method of the item includes a delivery method of delivering to a mailbox, the second identifying unit identifies the delivery method of delivering to the mailbox, the delivery method being according to the packing material, and the presentation unit presents the delivery method of delivering to the mailbox to the user. This makes it possible to present a more appropriate delivery method to the user according to the identified packing material.

The invention according to claim 15 is the information processing system according to claim 13, wherein the delivery method of the item includes a delivery method in which the user receives the item at a place other than home, the second identifying unit identifies the delivery method in which the user receives the item at the place other than home, the delivery method being according to the packing material, and the presentation unit presents the delivery method in which the user receives the item at the place other than home to the user. This makes it possible to present a more appropriate delivery method to the user according to the identified packing material.

The invention according to claim 16 is the information processing system according to any one of claims 1 to 15, wherein the delivery service detail includes a delivery date of the item, the second identifying unit identifies the delivery date according to the packing material, and the presentation unit presents the delivery date of the item to the user. This makes it possible to present a more appropriate delivery date to the user according to the identified packing material.

The invention according to claim 17 is a method for presenting a delivery service detail executed by one or more computers, including: a step of acquiring item information regarding an item selected by a user; a step of identifying a packing material to be used for delivery of the item on a basis of the item information; a step of identifying a delivery service detail according to the packing material, the delivery service detail being available to the user; and a step of presenting the delivery service detail to the user.

The invention according to claim 18 is a program configured to cause a computer to: acquire item information regarding an item selected by a user; identify a packing material to be used for delivery of the item on a basis of the item information; identify a delivery service detail according to the packing material, the delivery service detail being available to the user; and present the delivery service detail to the user.

### Advantageous Effect of the Invention

According to one or more embodiments of the present invention, it is possible to present an appropriate delivery service detail to the user according to the identified packing material.

### Brief Description of the Drawings

FIG. 1 is a diagram illustrating a schematic configuration example of an electronic commerce system S.
FIG. 2 is a block diagram illustrating a schematic configuration example of a user terminal 1.
FIG. 3A is a block diagram illustrating a schematic configuration example of a commerce server 2.
FIG. 3B is a diagram illustrating an example of functional blocks in a control unit 23.
FIG. 4A is a block diagram illustrating a schematic configuration example of a delivery service detail identifying server 3.
FIG. 4B is a diagram illustrating an example of functional blocks in a control unit 33.
FIG. 5A is a flowchart illustrating an example of processing in the control unit 23 of the commerce server 2.
FIG. 5B is a flowchart illustrating an example of processing in the control unit 33 of the delivery service detail identifying server 3.
FIG. 6 is a diagram illustrating an example of input data input to a learned model and output data output from the learned model.
FIG. 7A is a diagram illustrating a display example of a shopping basket screen.
FIG. 7B is a diagram illustrating a display example of an item order procedure screen.
FIG. 8A is a diagram illustrating a display example of a delivery method selection screen displayed when a change button 52b1 is designated in a delivery service detail selection area 52b illustrated in FIG. 7B.
FIG. 8B is a diagram illustrating a display example of a delivery method selection screen displayed when a change button 52b2 is designated in the delivery service detail selection area 52b illustrated in FIG. 7B.

### DETAILED DESCRIPTION

The following describes an embodiment of the present invention with reference to the drawings. In the following embodiment, the present invention is applied to an electronic commerce system.

### [1. Configuration and function overview of electronic commerce system S]

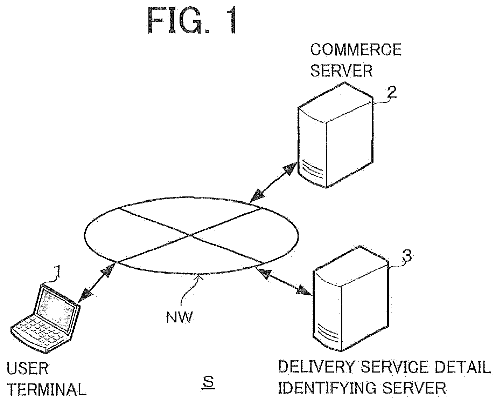

First, a configuration and a function overview of an electronic commerce system S according to the present embodiment will be described with reference to FIG. 1 and the like. FIG. 1 is a diagram illustrating a schematic configuration example of the electronic commerce system S. As illustrated in FIG. 1, the electronic commerce system S includes a user terminal 1, a commerce server 2, and a delivery service detail identifying server 3, and the like. Each of the user terminal 1, the commerce server 2, and the delivery service detail identifying server 3 is connected to a network NW. The network NW includes, for example, the Internet, a mobile communication network, a radio base station thereof, and the like. Incidentally, in the example of FIG. 1, only one user terminal 1 is shown, but actually a plurality of user terminals 1 are present.

### [1-1. Configuration and function of user terminal 1]

Next, a configuration and a function of the user terminal 1 will be described. The user terminal 1 is a terminal used by a user who is considering ordering an item. The item may be, for example, a product, a merchandise, a commodity, or an article. The user terminal 1 can access an EC site to which a specific URL (Uniform Resource Locator) is allocated on the network NW. The EC site is a site configured to allow the user to purchase an item put up for sale by a seller such as a store. As the user terminal 1, for example, a personal computer (PC), a smartphone, a tablet, a mobile phone, a portable game machine, or the like can be applied.

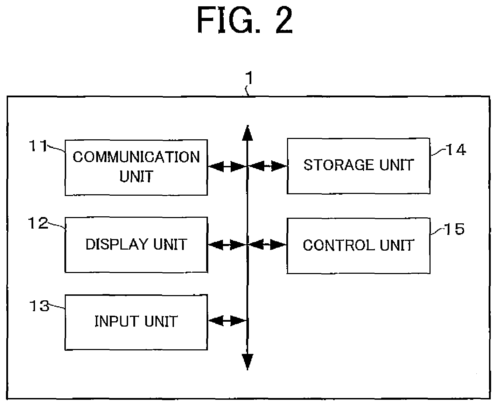

FIG. 2 is a block diagram illustrating a schematic configuration example of the user terminal 1. The user terminal 1 includes a communication unit 11, a display unit 12, an input unit 13, a storage unit 14, a control unit 15, and the like. The communication unit 11 has a function of connecting to the network NW. The display unit 12 has a function of displaying various screens on a display. For example, a web page of a screen prepared (e.g., stored in a memory) in advance or a screen provided from an EC site is displayed on the display by the display unit 12. Examples of such screens include an item search screen, an item browsing screen (an item selection screen), a shopping basket screen, and an item order procedure screen.

The input unit 13 has a function of receiving an instruction from the user. Examples of such instructions include selection of an item desired by the user, selection of a delivery service detail for the item selected by the user, and ordering of the item selected by the user. The storage unit 14 stores programs such as an operating system (OS), an application, and a web browser. The control unit 15 includes a CPU (Central Processing Unit) and a ROM (Read Only Memory), a RAM (Random Access Memory), and the like, and performs various processes according to the programs stored in the storage unit 14. For example, the control unit 15 performs processing of inputting an instruction from the user via the input unit 13, processing of transmitting various requests to the commerce server 2 via the communication unit 11, processing of receiving a web page from the commerce server 2 via the communication unit 11, processing of displaying various screens on the display via the display unit 12, and the like.

### [1-2. Configuration and function of commerce server 2]

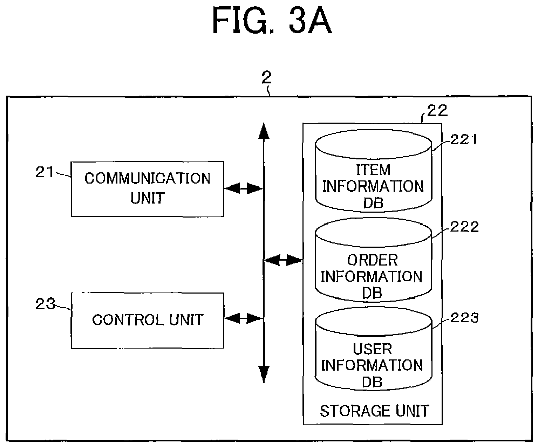

Next, a configuration and a function of the commerce server 2 will be described. The commerce server 2 includes one or more server computers, and functions as a web server that provides the above-described EC site. FIG. 3A is a block diagram illustrating a schematic configuration example of the commerce server 2. As illustrated in FIG. 3A, the commerce server 2 includes a communication unit 21, a storage unit 22, a control unit 23, and the like. The communication unit 21 has a function of connecting to the network NW. The storage unit 22 includes, for example, a hard disk drive or the like, and stores programs such as an operating system and an application. Moreover, in the storage unit 22, an item information database (DB) 221, an order information database (DB) 222, a user information database (DB) 223, and the like are constructed.

The item information database 221 is a database for storing item information regarding items. In the item information database 221, for example, an item ID, an item category, an item name, a price, an item photographic image, a stock quantity, warehouse information of a warehouse that stores the item, seller information, and the like are stored in association with each item. Here, the item ID is identification information for identifying an item. Examples of item categories include books, fashion, food, and the like. An item category may be further divided into lower subcategories. For example, examples of books subcategories include hard-cover books, independent books, pocket edition books, new books, and the like. Examples of fashion subcategories include clothes, shoes, accessories, and the like.

Incidentally, the item information database 221 may include specific information according to the item category. Examples of specific information include an item size (for example, dimensions of three sides of an item). For example, in the case of clothes, an item size in the flat state is stored. Moreover, in the case of a book, the number of pages and a thickness of the book are stored as specific information in association with the item ID. The item name may be a name printed on the item or its packing. However, the item name can include an item feature decided by a seller, and even the same item may be named different for each seller. The warehouse information includes, for example, a warehouse ID for identifying a warehouse. The warehouses may be located at different places, for example, depending on the item category. The seller information includes, for example, a seller ID for identifying a seller who has put up the item for sale.

The order information database 222 is a database for storing order information regarding orders. The order information database 222 stores, for example, an order ID, an item ID of an ordered item (order confirmed), quantity information of the ordered item, a delivery fee of the ordered item, a delivery destination of the ordered item, a delivery method of the ordered item, a delivery date of the ordered item, an order date and time, orderer information, and the like in association with each order. Here, the order ID is identification information for identifying an order. The delivery destination is represented by an address or a name designated (specified) by an orderer. Examples of delivery methods include a home delivery service, a mail delivery service, convenience store pickup, locker pickup, and post office pickup, and the like. The home delivery service is a delivery method in which a user receives an item (e.g., a packing material for packing the item) at home. The mail delivery service is a delivery method of delivering to a mailbox. The convenience store pickup is a delivery method in which a user receives an item at a place (i.e., convenience store) other than home. The locker pickup a delivery method in which a user receives an item at a place (i.e., locker box) other than home. The post office pickup is a delivery method in which a user receives an item at a place (i.e., post office) other than home. Moreover, in the case of the home delivery service, the delivery method may include face-to-face reception and unattended delivery. Here, the face-to-face reception is a delivery method in which a user receives an item face-to-face from a deliverer or an unmanned delivery machine (e.g., unmanned delivery vehicle). On the other hand, the unattended delivery is a delivery method in which an item is placed at a user's doorstep (outside the house) or the like by a deliverer or an unmanned delivery machine in a non-face-to-face manner. Incidentally, the delivery method may also be referred to as a receiving method. The delivery date is indicated by a date designated by the orderer. The date is a date in the future when the user wishes to have the item delivered. The delivery date may include a delivery time or a delivery time slot. The orderer information is user information (for example, a user ID) of the user who has ordered the item.

The user information database 223 is a database for storing user information regarding users whose accounts have been created as user members. In the user information database 223, for example, a user ID, a password, a name, an e-mail address, an address, item selection information, available payment (settlement) information, and the like are stored in association with each user. Here, the user ID is identification information for identifying a user, and is used along with a password to log in to the EC site. The item selection information includes an item ID of an item that has been selected by the user and has not been paid for yet, quantity information of the item, warehouse information of a warehouse that stores the item, and seller information of a seller who has put up the item for sale, and the like. The item that has been selected and has not been paid for yet is, for example, an item in a virtual shopping basket. The available payment information is information on a payment method or the like that can be used by the user, and includes information necessary for electronic money payment or credit card payment.

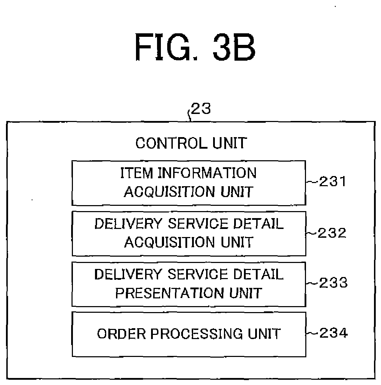

The control unit 23 as a computer includes at least one CPU, a ROM, a RAM, and the like, and performs various processes according to the programs (program code) stored in the storage unit 22. FIG. 3B is a diagram illustrating an example of functional blocks in the control unit 23. In various processes, as illustrated in FIG. 3B, the control unit 23 functions as an item information acquisition unit 231 (an example of an acquisition unit), a delivery service detail acquisition unit 232, a delivery service detail presentation unit 233 (an example of a presentation unit), an order processing unit 234.

For example, the item information acquisition unit 231 acquires, from the item information database 221, item information regarding one or more items (for example, an item added to a virtual shopping basket) selected by the user on the item browsing screen of the user terminal 1. The item information acquired here is information for identifying a packing material used for delivery of the item. In a case where the item size of the selected item is stored in the item information database 221, the item size may be preferentially acquired as the item information. Moreover, in a case where the item category of the selected item is clothes, the item name may be acquired as the item information together with the item size. Moreover, in a case where the item category of the selected item is books, at least one of the subcategories, the number of pages (or thickness) and the price, may be acquired as the item information. Incidentally, depending on the item category of the selected item, an item photographic image may be acquired as the item information.

The delivery service detail acquisition unit 232 transmits the item information acquired by the item information acquisition unit 231 to the delivery service detail identifying server 3, thereby acquiring, from the delivery service detail identifying server 3, a delivery service detail (in other words, delivery service contents) according to a packing material used for delivery of the item (that is, the item selected by the user) related to the item information. Here, the packing material is identified by the delivery service detail identifying server 3 as described later on the basis of the item information acquired by the item information acquisition unit 231. The delivery service detail according to the packing material is a detail available to the user who has selected the item, and may include, for example, at least one of a delivery fee, a delivery method, and a delivery date (arrival date) of the item.

For example, the delivery fee, the delivery method, and the delivery date included in the delivery service detail may vary depending on the packing material. For example, a packing material having a larger packing material size has a higher delivery fee. For example, a packing material for a hard-cover book has a higher delivery fee. Moreover, a packing material having a packing material size exceeding 100 cm (dimensions of three sides: length + width + height) can be delivered to a delivery destination by the home delivery service, but cannot be picked up at a convenience store or from a locker (that is, the convenience store pickup and the locker pickup is not available). Moreover, a packing material that can be delivered by the mail delivery service is limited to a packing material size (for example, 34 cm × 25 cm × 3 cm) that can be dropped into a mailbox or less. The delivery date is a date and a time slot of delivery and varies depending on the packing material. For example, a date and a time slot of delivery can be designated for the home delivery service, but not for the mail delivery service. Incidentally, the delivery service detail acquisition unit 232 may acquire a plurality of delivery service details according to the packing material from the delivery service detail identifying server 3. Moreover, each time an item is selected by the user, the delivery service detail acquisition unit 232 may acquire a delivery service detail according to the packing material used for delivery of all the selected items from the delivery service detail identifying server 3.

The delivery service detail presentation unit 233 transmits the delivery service detail acquired by the delivery service detail acquisition unit 232 to the user terminal 1 and displays the delivery service detail on the shopping basket screen, the order procedure screen, or the like of the user terminal 1. As a result, it is possible to present an appropriate delivery service detail to the user according to the packing material. Incidentally, the delivery service detail presentation unit 233 updates the displayed delivery service detail to a delivery service detail acquired by the delivery service detail acquisition unit 232 each time an item is selected by the user. Accordingly, an updated delivery service detail can be presented to the user each time the user selects an item. Moreover, in a case where a plurality of delivery service details are identified by the delivery service detail acquisition unit 232, the delivery service detail presentation unit 233 transmits the plurality of delivery service details to the user terminal 1 and displays the delivery service details on the shopping basket screen, the order procedure screen, or the like of the user terminal 1 so that the user can select any one of the plurality of delivery service details. As a result, the user can select a desired delivery service detail from the plurality of delivery service details.

The order processing unit 234 executes order processing in response to an order processing request transmitted from the user terminal 1 by the user designating an order confirmation button on the order procedure screen or the like displaying the item and the delivery service detail. In such order processing, a payment is made on the basis of the available payment information of the user, and order information regarding the order is stored in the order information database 222.

### [1-3. Configuration and function of delivery service detail identifying server 3]

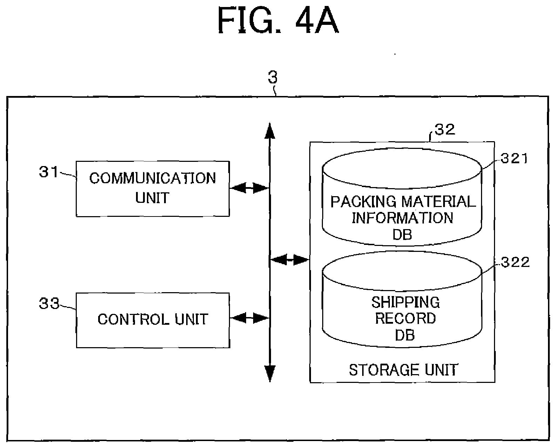

Next, a configuration and a function of the delivery service detail identifying server 3 will be described. The delivery service detail identifying server 3 includes one or more server computers, and functions as, for example, an API (Application Programming Interface) server. FIG. 4A is a block diagram illustrating a schematic configuration example of the delivery service detail identifying server 3. As illustrated in FIG. 4A, the delivery service detail identifying server 3 includes a communication unit 31, a storage unit 32, a control unit 33, and the like. The communication unit 31 has a function of connecting to the network NW. The storage unit 32 includes, for example, a hard disk drive or the like, and stores programs such as an operating system and an application. Moreover, in the storage unit 32, a packing material information database (DB) 321, a shipping record database (DB) 322, and the like are constructed.

The packing material information database 321 is a database for storing packing material information related to packing materials. In the packing material information database 321, for example, a material ID, a material name, a packing material size, a delivery service detail, a stock quantity, warehouse information of a warehouse where the packing material is available, and the like are stored in association with each packing material. Here, the material ID is identification information for identifying a packing material. The delivery service detail includes at least one of a delivery fee according to the packing material, a delivery method according to the packing material, and a delivery date according to the packing material. For example, the delivery method according to the packing material may include the home delivery service, the convenience store pickup, and the locker pickup, which are available to the user (that is, a plurality of options are included), or may include only home delivery service, which is available to the user. Incidentally, the packing material size may be a volume of the packing material.

The shipping record database 322 is a database for storing shipping records of items packed using packing materials. In the shipping record database 322, for example, an item ID of a shipped item, a material ID of a packing material used for the shipping, warehouse information of a warehouse where the item is shipped, and a packing date and time are stored in association with each other. When a plurality of items are packed and shipped in one packing material, the item IDs of the respective items and the material ID of the one packing material in which the items are packed are stored in association with each other. Moreover, the storage unit 32 stores an item mapping master that associates an item category with an item size. In a case where the item category has subcategories, the item mapping master associates the subcategories with item sizes. Incidentally, the item mapping master may not be provided for all item categories.

Furthermore, the storage unit 32 may store a learned model (a machine learning model) learned from learning data in which item information regarding an item is input data and a packing material size used for delivery of the item is output data. Here, the item information as the input data in the learning data may be configured to be different according to the item category. For example, in the case of clothes, item information as the input data in the learning data may be an item name and an item size. Moreover, in the case of a book, item information as the input data in the learning data may be a subcategory (hard-cover books, independent books, pocket edition books, new books, or the like). Alternatively, the item information in this case may be "an item name (or subcategory) and the number of pages (or thickness)", "an item name (or subcategory) and a price", or "an item name (or subcategory), the number of pages (or thickness), and a price". Incidentally, the item information used as the input data in the learning data may include an item photographic image.

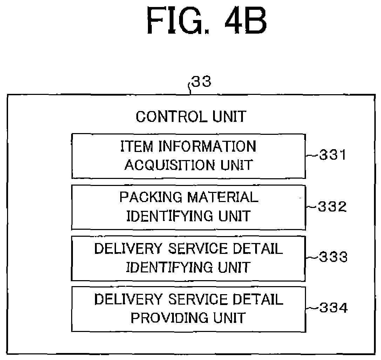

The control unit 33 as a computer includes at least one CPU, a ROM, a RAM, and the like, and performs various processes according to the programs (program code) stored in the storage unit 32. FIG. 4B is a diagram illustrating an example of functional blocks in the control unit 33. In various processes, as illustrated in FIG. 4B, the control unit 33 functions as an item information acquisition unit 331 (an example of an acquisition unit), a packing material identifying unit 332 (an example of a first identifying unit), a delivery service detail identifying unit 333 (an example of a second identifying unit), a delivery service detail providing unit 334, and the.

The item information acquisition unit 331 acquires item information regarding the item selected by the user from the commerce server 2. On the basis of the item information acquired by the item information acquisition unit 331, the packing material identifying unit 332 identifies (for example, identifies by material ID) one or more packing materials used for delivery of the item related to the item information. For example, the packing material identifying unit 332 determines whether or not the item related to the item information acquired by the item information acquisition unit 331 has a shipping record by referring to the shipping record database 322. Then, when it is determined that the item has the shipping record, the packing material identifying unit 332 identifies one or more packing materials that have a record of packing the item on the basis of the shipping record. Accordingly, it is possible to identify an appropriate packing material based on the shipping record. Incidentally, in a case where there are a plurality of items related to the item information, a packing material having a record of packing the respective items together is identified.

On the other hand, when there is no shipping record for the item related to the item information acquired by the item information acquisition unit 331 and an item size is included in the item information, the packing material identifying unit 332 calculates the total volume of the item on the basis of the item size. Alternatively, in a case where an item category is included in the item information, the packing material identifying unit 332 may identify an item size associated with the item category (for example, subcategory) from the item mapping master, and calculate the total volume of the item on the basis of the item size. Incidentally, in a case where there is one item related to the item information, the total volume is calculated from the item size of the one item. On the other hand, in a case where there are a plurality of items related to the item information, the total volume is calculated by adding the volumes of the respective items. Then, the packing material identifying unit 332 identifies one or more packing materials corresponding to the packing material size (in other words, the volume) that fits the calculated total volume, from the packing material information database 321.

As another example, the packing material identifying unit 332 may identify one or more packing materials using the learned model stored in the storage unit 32. That is, the packing material identifying unit 332 inputs the item information acquired by the item information acquisition unit 331 to the learned model, and identifies, from the packing material information database 321, a packing material corresponding to a packing material size output from the learned model. At this time, when a plurality of packing material sizes are output from the learned model, packing materials corresponding to individual packing material sizes are identified (that is, packing materials are identified). Alternatively, one packing material corresponding to the minimum packing material size among those packing material sizes is identified. Accordingly, an appropriate packing material which is highly convenient for the user can be identified and, for example, the delivery fee can be reduced.

Incidentally, the item information input to the learned model may be configured to be different according to the item category. As a result, an appropriate packing material can be identified according to the item category. For example, in the case of clothes, the item information input to the learned model may include an item name and an item size. For example, the item size of the clothes is measured in a flat state, and therefore the item size is different from the size of the clothes packed in a folded state. However, an appropriate packing material can be identified by inputting the item name and the item size into the learned model. Moreover, even in the case of an item other than clothes whose size changes, an appropriate packing material can be similarly identified.

Moreover, in the case of a book, the item information input to the learned model may include a subcategory. As a result, for example, it is possible to identify an appropriate packing material according to hard-cover books, independent books, pocket edition books, or new books. Alternatively, the item information in this case may include "an item name (or subcategory) and the number of pages (or thickness)"; "an item name (or subcategory) and a price"; or "an item name (or subcategory), the number of pages (or thickness), and a price". As a result, even in the case of an item such as books belonging to the same subcategory but having different prices or different numbers of pages (or thickness), it is possible to identify an appropriate packing material according to the item. Incidentally, the item information input to the learned model may include an item photographic image.

By the way, it is assumed that there are unavailable packing materials depending on a warehouse that stores items. In this case, the packing material identifying unit 332 extracts, from the packing material information database 321, packing materials available in a warehouse where the item related to the item information acquired by the item information acquisition unit 331 is stored. Then, the packing material identifying unit 332 identifies one or more packing materials to be used for delivery of the item from the extracted packing materials as described above. As a result, an appropriate packing material can be identified from among available packing materials, which vary by warehouse.

The delivery service detail identifying unit 333 identifies a delivery service detail (data) according to the packing material identified by the packing material identifying unit 332 from the packing material information database 321. That is, the delivery service detail associated with the material ID of the packing material is identified. For example, the delivery service detail identifying unit 333 identifies, from the packing material information database 321, a delivery fee (delivery fee for the item) according to the packing material identified by the packing material identifying unit 332. Thus, since the delivery fee according to the identified packing material is presented to the user by the delivery service detail presentation unit 233 of the commerce server 2, an appropriate delivery fee according to the identified packing material can be presented to the user. Incidentally, in a case where a plurality of packing materials are identified by the packing material identifying unit 332, the delivery service detail identifying unit 333 identifies a delivery service detail according to each of the plurality of packing materials (that is, identifies a plurality of delivery service details). In this case, the delivery service detail identifying unit 333 may identify a delivery service detail having the lowest delivery fee of the item among the plurality of delivery service details. As a result, since the delivery service detail with the lowest delivery fee of the item is presented to the user by the delivery service detail presentation unit 233 of the commerce server 2, it is possible to present to the user the delivery service detail that imposes the smallest financial burden on the user.

Moreover, the delivery service detail identifying unit 333 may identify a delivery method (delivery method for the item) according to the packing material identified by the packing material identifying unit 332 from the packing material information database 321. Accordingly, since the identified delivery method is presented to the user by the delivery service detail presentation unit 233 of the commerce server 2, an appropriate delivery method can be presented to the user in accordance with the identified packing material. For example, the delivery service detail identifying unit 333 identifies a delivery method of delivering to a mailbox, according to the packing material identified by the packing material identifying unit 332. Thus, a more appropriate delivery method can be presented to the user according to the identified packing material. Alternatively, the delivery service detail identifying unit 333 identifies a delivery method in which a user receives the item at a place other than home (for example, convenience store pickup, locker pickup, post office pickup, and the like), according to the packing material identified by the packing material identifying unit 332. Thus, a more appropriate delivery method can be presented to the user according to the identified packing material. Moreover, the delivery service detail identifying unit 333 may identify an item delivery date according to the packing material identified by the packing material identifying unit 332. Thus, a more appropriate delivery date can be presented to the user according to the identified packing material. The delivery service detail providing unit 334 transmits one or more delivery service details identified by the delivery service detail identifying unit 333 to the commerce server 2. The delivery service detail thus transmitted is acquired by the delivery service detail acquisition unit 232 of the commerce server 2.

### [2. Operations of electronic commerce system S]

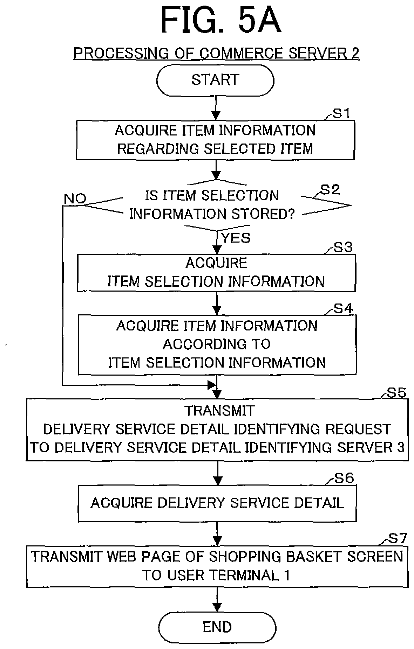

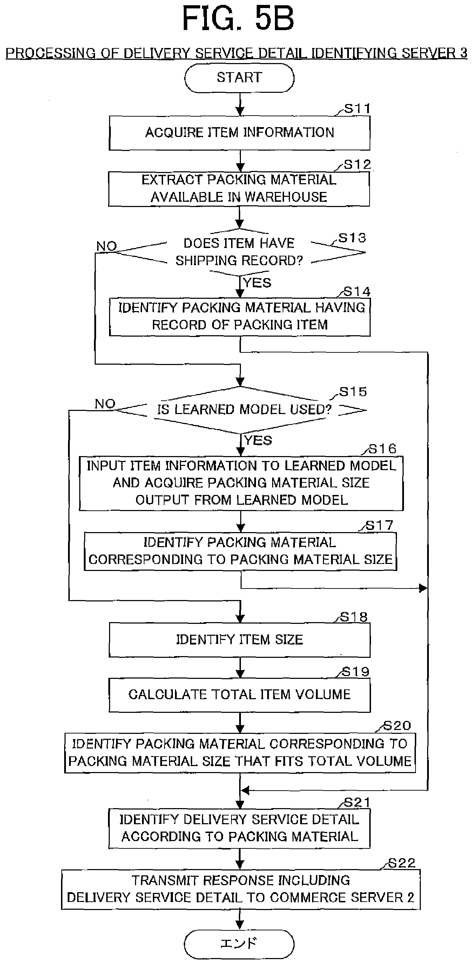

Next, operations performed in the electronic commerce system S will be described with reference to FIGS. 5A and 5B. FIG. 5A is a flowchart illustrating an example of processing in the control unit 23 of the commerce server 2. FIG. 5B is a flowchart illustrating an example of processing in the control unit 33 of the delivery service detail identifying server 3.

Incidentally, as a premise of the operations described below, the user terminal 1 displays, for example, a screen (for example, the item browsing screen) of a web page provided from an EC site through a browser on a display. It is assumed that a user of the user terminal 1 is identified by the commerce server 2 by logging in to the EC site before or after such display. Then, when the identified user selects an item to order on the item browsing screen, an item selection request including the item ID of the selected item and the quantity information of the item is transmitted to the commerce server 2 via the network NW. Here, the selection of the item is carried out, for example, by designating a button for adding to the virtual shopping basket (for example, by clicking with a mouse or tapping with a finger). At this time, the user can also designate the quantity of the selected item. The designated quantity is included in the quantity information. Incidentally, in a case where the quantity of the item is not designated, a default quantity "1" is included in the quantity information.

The process illustrated in FIG. 5A is started when an item selection request from the user terminal 1 is received by the commerce server 2. When the process illustrated in FIG. 5A is started, the control unit 23 (the item information acquisition unit 231) of the commerce server 2 acquires, from the item information database 221, item information related to the item (that is, the item identified by the item ID included in the received item selection request) selected by the identified user (step S1). The item information acquired here may include an item ID, an item name, an item category, and warehouse information. In a case where there is specific information according to the item category, the specific information may be further included. At this time, the quantity information included in the item selection request may be acquired and included in the item information acquired in step S1.

Next, the control unit 23 determines whether or not the item selection information associated with the user ID of the identified user is stored in the user information database 223 (step S2). In a case where it is determined that the item selection information is not stored (step S2: NO), the process proceeds to step S5. Incidentally, in a case where the item selection information is not stored in the user information database 223, new item selection information is stored in association with the user ID of the identified user. The item selection information includes the item ID included in the item information acquired in step S1, quantity information of the item, warehouse information of a warehouse that stores the item, and seller information of a seller who has put up the item for sale.

On the other hand, in a case where it is determined that the item selection information is stored (step S2: YES), the process proceeds to step S3. Here, in a case where the seller information included in the item information of the item selected by the identified user is different from the seller information included in the item selection information stored in association with the user ID of the user, the process may be configured to proceed to step S5 without proceeding to step S3. This is to pack items sold by different sellers using different packing materials. Moreover, in a case where the warehouse information included in the item information of the item selected by the identified user is different from the warehouse information included in the item selection information stored in association with the user ID of the user, the process may be configured to proceed to step S5 without proceeding to step S3. This is to pack items stored in different warehouses using different packing materials. Incidentally, in a case where the item selection information is stored in the user information database 223, the item selection information is updated by adding the item ID included in the item information acquired in step S1, the quantity information of the item, the warehouse information of the warehouse that stores the item, the seller information of the seller who has put up the item for sale, and the like to the item selection information.

Next, the control unit 23 (the item information acquisition unit 231) acquires the item selection information associated with the user ID of the identified user from the user information database 223 (step S3). Then, the control unit 23 (the item information acquisition unit 231) acquires, from the item information database 221, the item information regarding the item identified by the item ID included in the item selection information acquired in step S3 (that is, the item information according to the item selection information) (step S4), and advances the processing to step S5. The item information acquired here is similar to that in step S1. At this time, the quantity information of the item may be acquired from the item selection information and included in the item information acquired in step S4.

In step S5, the control unit 23 (the delivery service detail acquisition unit 232) transmits a delivery service detail identifying request including the item information (including the quantity information) acquired in step S1 (alternatively, step S1 and step S4) to the delivery service detail identifying server 3 via the network NW.

The process illustrated in FIG. 5B is started when the delivery service detail identifying request from the commerce server 2 is received by the delivery service detail identifying server 3. When the process illustrated in FIG. 5B is started, the control unit 33 (the item information acquisition unit 331) of the delivery service detail identifying server 3 acquires the item information from the received delivery service detail identifying request (step S11). Next, the control unit 33 extracts the available packing materials in the warehouse (that is, a warehouse that stores the item selected by the user) identified by the warehouse information included in the item information acquired in step S11 from the packing material information database 321 (step S12). Incidentally, in a case where available packing materials are the same for all warehouses, the processing of step S12 may not be performed, and the process may proceed to step S13. In this case, in the subsequent processing, all the packing materials managed in the packing material information database 321 may be made candidates for the identification target.

Next, on the basis of the item information acquired in step S11, the control unit 33 (the packing material identifying unit 332) determines whether or not the item related to the item information has a shipping record by referring to the shipping record database 322 (step S13). In a case where the item information of each of a plurality of items is acquired in step S11, it is determined whether or not there is a shipping record in which the respective items are packed together. Here, the plurality of items corresponds to one or both of a case of a plurality of same items (for example, the same item ID) and a case of a plurality of different items (for example, different item IDs). Incidentally, in a case where the shipping record including the packing of the item is not managed, the processing of step S13 may not be performed and the process may proceed to step S15.

In a case where it is determined that there is the shipping record for the item related to the item information (step S13: YES), the control unit 33 (the packing material identifying unit 332) identifies (for example, identifies by material ID) a packing material having a record of packing one or more items from among the packing materials extracted in step S12 (step S14), and advances the processing to step S21. Here, in a case where a plurality of types of packing materials having different packing material sizes are identified, a packing material corresponding to the minimum packing material size may be finally identified.

On the other hand, in a case where it is determined that there is no shipping record for the item related to the item information (step S13: NO), the control unit 33 determines whether or not to use the learned model on the basis of the item information acquired in step S11 (step S15). For example, in a case where clothes or books are included as the item category in the acquired item information, it is determined that the learned model is used. In a case where it is determined that the learned model is used (step S15: YES), the process proceeds to step S16. On the other hand, in a case where it is determined that the learned model is not used (step S15: NO), the process proceeds to step S18. Incidentally, whether or not to use the learned model may be set by default.

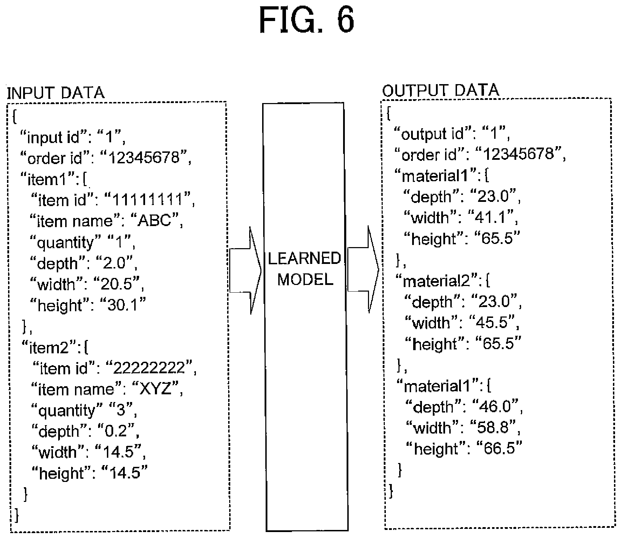

In step S16, the control unit 33 (the packing material identifying unit 332) acquires the packing material size (output data) output from the learned model by inputting the item information (input data) acquired in step S11 to the learned model. FIG. 6 is a diagram illustrating an example of input data input to the learned model and output data output from the learned model. In the example of FIG. 6, the input data includes an item ID, an item name, a quantity of the item, and an item size of each of two items (items), and the output data includes three packing material sizes. In this case, three packing materials are identified.

Next, the control unit 33 (the packing material identifying unit 332) identifies (for example, identifies by material ID) a packing material corresponding to the packing material size acquired in step S16 from among the packing materials extracted in step S12 (step S17), and advances the process to step S21. Here, in a case where a plurality of types of packing materials having different packing material sizes are identified, a packing material corresponding to the minimum packing material size may be finally identified.

In step S18, the control unit 33 (the packing material identifying unit 332) identifies the item size associated with the item category included in the item information acquired in step S11 from the item mapping master. Incidentally, in a case where the item information of each of the plurality of items is acquired in step S11, the item size of each item is identified. Next, the control unit 33 (the packing material identifying unit 332) calculates the total volume of the item on the basis of the item size identified in step S18 (step S19).

Next, the control unit 33 (the packing material identifying unit 332) identifies (for example, identifies by material ID) a packing material corresponding to the packing material size that fits the total volume calculated in step S19, from among the packing materials extracted in step S12 (step S20), and advances the processing to step S21. Here, in a case where a plurality of types of packing materials having different packing material sizes are identified, a packing material corresponding to the minimum packing material size may be finally identified.

In step S21, the control unit 33 (the delivery service detail identifying unit 333) identifies a delivery service detail according to the packing material identified in step S14, step S17, or step S20 from the packing material information database 321. Incidentally, in a case where a plurality of packing materials are identified in step S14, step S17, or step S20, a delivery service detail according to each of the plurality of packing materials is identified. Next, the control unit 33 (the delivery service detail providing unit 334) transmits a response including one or more delivery service details identified in step S21 to (responds to) the commerce server 2 via the network NW (step S22).

Returning to the processing of FIG. 5A, upon receiving the response from the delivery service detail identifying server 3, the control unit 23 (the delivery service detail acquisition unit 232) of the commerce server 2 acquires one or more delivery service details from the response (step S6). Next, the control unit 23 (the delivery service detail presentation unit 233) of the commerce server 2 transmits the web page of the shopping basket screen including one or more delivery service details acquired in step S6 to (responds to) the user terminal 1 via the network NW (step S7). As a result, the shopping basket screen including the delivery service detail is displayed on the display of the user terminal 1.

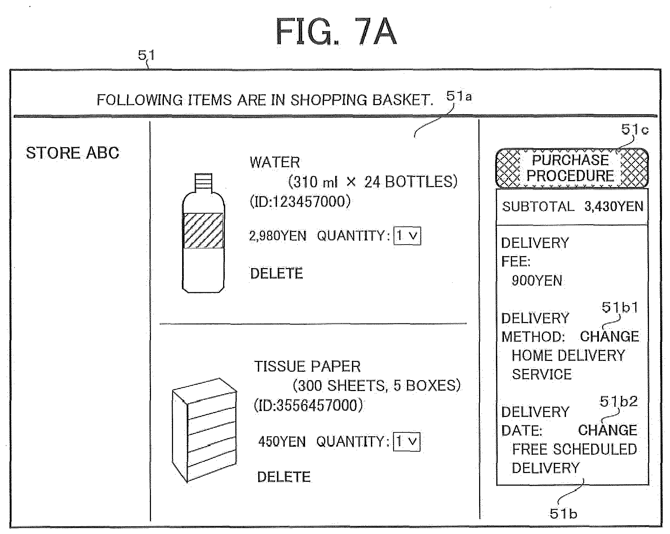

FIG. 7A is a diagram illustrating a display example of the shopping basket screen. The shopping basket screen 51 illustrated in FIG. 7A is provided with the item information display area 51a, the delivery service detail display area 51b, and the like. In the item information display area 51a, the item name, the item photographic image, the price, and the like of each of the two items selected by the user are displayed. These two items are to be packed using one packing material. In the delivery service detail display area 51b, the delivery fee "900 yen", the delivery method "home delivery service", and the delivery date "free scheduled delivery" are displayed as the delivery service detail X corresponding to the packing material x corresponding to the minimum packing material size among the plurality of packing materials x and y identified by the packing material identifying unit 332. As a result, the delivery service detail X according to the packing material x can be presented to the user before the order of the item selected by the user is confirmed. Therefore, convenience for the user can be enhanced.

Incidentally, in the delivery service detail display area 51b illustrated in FIG. 7A, "home delivery service" is initially selected as the delivery method related to the delivery service detail X, but the user can change the delivery method to another delivery method available on another screen displayed by designating the change button 51b1. Here, another delivery method is, for example, "convenience store pickup" or "locker pickup" according to the identified packing material x. Moreover, in the delivery service detail display area 51b illustrated in FIG. 7A, "free scheduled delivery" is initially set as the delivery date related to the delivery service detail X, but the user can designate a delivery date (that is, a delivery date according to the identified packing material x) available on another screen displayed by designating the change button 51b2. Then, when the user designates the purchase procedure button 51c illustrated in FIG. 7A, an item order procedure screen is displayed on the display of the user terminal 1.

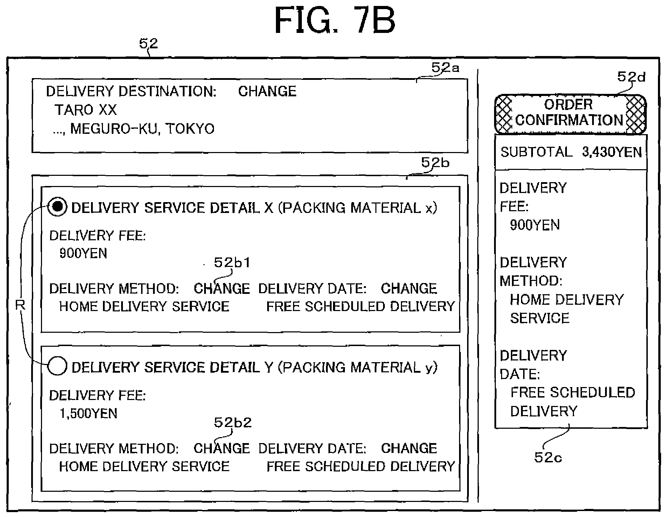

FIG. 7B is a diagram illustrating a display example of the item order procedure screen. The item order procedure screen 52 illustrated in FIG. 7B is provided with the delivery destination display area 52a, the delivery service detail selection area 52b, the delivery service detail display area 52c, and the like. In the delivery service detail selection area 52b, the delivery service detail X according to the packing material x and the delivery service detail Y according to the packing material y are displayed so that the user can select any one of the delivery service details by the radio button R. In the delivery service detail display area 52c, the delivery fee "900 yen", the delivery method "home delivery service", and the delivery date "free scheduled delivery" related to the currently selected delivery service detail X are displayed. Incidentally, the delivery service detail Y according to the packing material y may be selectively displayed on the shopping basket screen 51 illustrated in FIG. 7A. Moreover, in the delivery service detail selection area 52b, photographic images and features (for example, advantages in packing) of the respective packing materials x and y may be displayed. Alternatively, of the delivery service detail X and the delivery service detail Y illustrated in FIG. 7B, only the delivery service detail X with the lowest delivery fee may be configured to be identified and displayed in the delivery service detail selection area 52b.

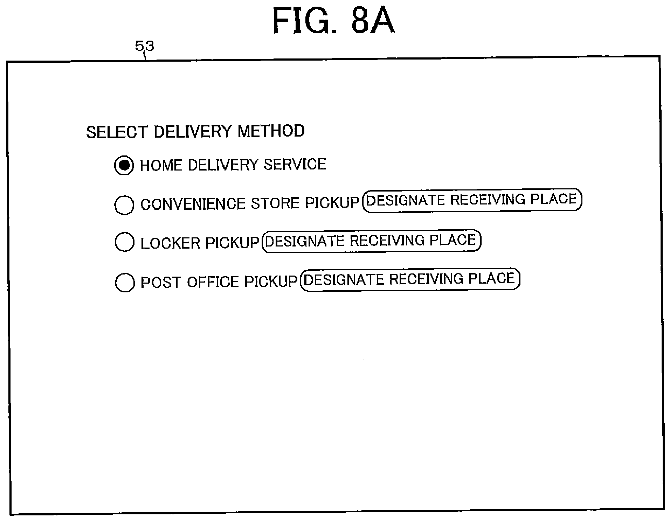

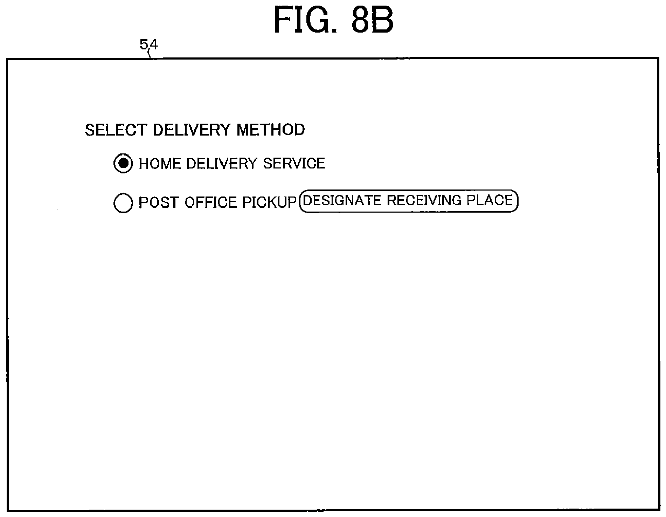

FIG. 8A is a diagram illustrating a display example of the delivery method selection screen displayed when the change button 52b1 is designated in the delivery service detail selection area 52b illustrated in FIG. 7B. On the delivery method selection screen 53 illustrated in FIG. 8A, "convenience store pickup", "locker pickup", and "post office pickup" are displayed as selectable delivery methods available to the user in addition to the currently selected "home delivery service". On the other hand, FIG. 8B is a diagram illustrating a display example of the delivery method selection screen displayed when the change button 52b2 is designated in the delivery service detail selection area 52b illustrated in FIG. 7B. On the delivery method selection screen 54 illustrated in FIG. 8B, as the delivery method available to the user, only "post office pickup" is displayed in a selectable manner in addition to the currently selected "home delivery service". In this way, only the delivery method according to the identified packing material is displayed so as to be selectable by the user. Incidentally, in FIGS. 8A and 8B, in a case where the user selects "convenience store pickup", "locker pickup", or "post office pickup" as the delivery method, a receiving place can be designated by the user.

Then, when the user designates the order confirmation button 52d illustrated in FIG. 7B, an order processing request for the item in the virtual shopping basket is transmitted to the commerce server 2. As a result, the control unit 23 (order processing unit 234) of the commerce server 2 executes order processing in response to the order processing request. Incidentally, until the order confirmation button 52d is designated by the user, each time an item is selected (for example, the item is selected after returning to the item browsing screen), an item selection request is transmitted from the user terminal 1 to the commerce server 2, whereby the processes illustrated in FIGS. 5A and 5B are executed. As a result, the delivery service detail displayed on the shopping basket screen 51 or the like is updated, so that an updated delivery service detail can be presented to the user each time the item in the virtual shopping basket is updated.

Incidentally, the delivery service detail presented to the user may include content that does not correspond to the packing material. For example, a delivery fee set by the seller may be included in the delivery service detail presented to the user. For example, a delivery method and a delivery date set by the seller may be included in the delivery service detail presented to the user.

As described above, according to the above embodiment, the electronic commerce system S is configured to acquire item information regarding the item selected by the user, identify the packing material used for delivery of the item on the basis of the acquired item information, identify the delivery service detail according to the identified packing material, and present the identified delivery service detail to the user. Therefore, it is possible to present an appropriate delivery service detail to the user according to the packing material. By identifying the delivery service detail in this manner, it is possible to prevent a delivery service detail that is not available to the user from being presented to the user, and eventually, it is possible to prevent such a delivery service detail from being selected by the user. Therefore, the system load can be reduced.

Incidentally, the above-described embodiment is one embodiment of the present invention, and the present invention is not limited to the above-described embodiment, changes from the above-described embodiment can be made on various configurations and the like within a scope not departing from the gist of the present invention, and such cases shall be also included in the technical scope of the present invention. In the above embodiment, an example in which the item selected by the user is added to the virtual shopping basket has been described, but as another example, the present invention can be applied to a case where the item selected by the user is added to reference information such as a favorite or a bookmark of the user. Moreover, in the above embodiment, the example in which the commerce server 2 and the delivery service detail identifying server 3 are separated in hardware has been described, but the function of the delivery service detail identifying server 3 may be configured to be incorporated in the commerce server 2.

### Reference Signs List

- 1: User terminal
- 2: Commerce server
- 3: Delivery service detail identifying server
- 11: Communication unit
- 12: Display unit
- 13: Input unit
- 14: Storage unit
- 15: Control unit
- 21: Communication unit
- 22: Storage unit
- 23: Control unit
- 31: Communication unit
- 32: Storage unit
- 33: Control unit
- 231: Item information acquisition unit
- 232: Delivery service detail acquisition unit
- 233: Delivery service detail presentation unit
- 234: Order processing unit
- 331: Item information acquisition unit
- 332: Packing material identifying unit
- 333: Delivery service detail identifying unit
- 334: Delivery service detail providing unit
- NW: Network
- S: Electronic commerce system

## Claims

1. An information processing system comprising:
an acquisition unit configured to acquire item information regarding an item selected by a user;
a first identifying unit configured to identify a packing material used for delivery of the item on a basis of the item information;
a second identifying unit configured to identify a delivery service detail according to the packing material, the delivery service detail being available to the user; and
a presentation unit configured to present the delivery service detail to the user.

2. The information processing system according to claim 1, wherein
the presentation unit presents the delivery service detail to the user before an order of the item selected by the user is confirmed.

3. The information processing system according to claim 1 or 2, wherein
the presentation unit updates the delivery service detail presented to the user every time the item is selected by the user.

4. The information processing system according to any one of claims 1 to 3, wherein
the second identifying unit identifies a plurality of delivery service details according to the packing material, and
the presentation unit presents each of the delivery service details to the user so that the user can select any one of the plurality of delivery service details.

5. The information processing system according to any one of claims 1 to 4, wherein
the first identifying unit identifies the packing material by using a learned model that learned from learning data in which item information regarding an item is input data and a packing material size used for delivery of the item is output data.

6. The information processing system according to claim 5, wherein
the item information used as input data in the learning data varies depending on an item category.

7. The information processing system according to claim 5, wherein
the item information used as input data in the learning data includes an item name and an item size.

8. The information processing system according to any one of claims 5 to 7, wherein
the first identifying unit inputs the item information regarding the item selected by the user to the learned model, and identifies the packing material corresponding to a minimum packing material size among a plurality of the packing material sizes output from the learned model.

9. The information processing system according to any one of claims 1 to 8, wherein
the first identifying unit extracts packing materials available in a warehouse that stores the item selected by the user, and identifies the packing material used for delivery of the item from the extracted packing materials on a basis of the item information.

10. The information processing system according to any one of claims 1 to 9, wherein
the first identifying unit determines whether or not the item selected by the user has a shipping record, and identifies the packing material on a basis of the shipping record in a case where it is determined that the item has the shipping record.

11. The information processing system according to any one of claims 1 to 10, wherein
the delivery service detail includes a delivery fee of the item,
the second identifying unit identifies the delivery fee according to the packing material, and
the presentation unit presents the delivery fee of the item to the user.

12. The information processing system according to claim 11, wherein
when a plurality of delivery service details according to the packing material are identified, the second identifying unit identifies the delivery service detail with a lowest delivery fee of the item among the plurality of delivery service details, and
the presentation unit presents the delivery service detail with the lowest delivery fee of the item to the user.

13. The information processing system according to any one of claims 1 to 12, wherein
the delivery service detail includes a delivery method of the item,
the second identifying unit identifies the delivery method according to the packing material, and
the presentation unit presents the delivery method of the item to the user.

14. The information processing system according to claim 13, wherein
the delivery method of the item includes a delivery method of delivering to a mailbox,
the second identifying unit identifies the delivery method of delivering to the mailbox, the delivery method being according to the packing material, and
the presentation unit presents the delivery method of delivering to the mailbox to the user.

15. The information processing system according to claim 13, wherein
the delivery method of the item includes a delivery method in which the user receives the item at a place other than home,
the second identifying unit identifies the delivery method in which the user receives the item at the place other than home, the delivery method being according to the packing material, and
the presentation unit presents the delivery method in which the user receives the item at the place other than home to the user.

16. The information processing system according to any one of claims 1 to 15, wherein
the delivery service detail includes a delivery date of the item,
the second identifying unit identifies the delivery date according to the packing material, and
the presentation unit presents the delivery date of the item to the user.

17. A method for presenting a delivery service detail executed by one or more computers, including:
a step of acquiring item information regarding an item selected by a user;
a step of identifying a packing material to be used for delivery of the item on a basis of the item information;
a step of identifying a delivery service detail according to the packing material, the delivery service detail being available to the user; and
a step of presenting the delivery service detail to the user.

18. A program configured to cause a computer to:
acquire item information regarding an item selected by a user;
identify a packing material to be used for delivery of the item on a basis of the item information;
identify a delivery service detail according to the packing material, the delivery service detail being available to the user; and
present the delivery service detail to the user.
